# EUROPÄISCHE PATENTSCHRIFT

(11) **EP 1 967 351 B1**
(45) Veröffentlichungstag und Bekanntmachung des Hinweises auf die Patenterteilung: **13.06.2018**
(21) Anmeldenummer: 08003627.0
(22) Anmeldetag: 28.02.2008
(51) Int. Cl.: B29C 49/56, B29C 49/42, B29C 49/04

(54) **Blasformmaschine und Verfahren zum Extrusionsblasformen von Hohlkörpern**
Blow moulding machine and method for extrusion blow moulding of hollow bodies
Machine de moulage par soufflage et procédé destiné au moulage par soufflage de corps creux

(30) Priorität: 05.03.2007 DE 102007011000
(43) Veröffentlichungstag der Anmeldung: 10.09.2008
(73) Patentinhaber: Kautex Maschinenbau GmbH, 53229 Bonn (DE)
(72) Erfinder: Greis, Carsten, 53757 Sankt Augustin (DE); Walbroel, Stefan, 53757 Sankt Augustin (DE); Klein, Günter, 53639 Königswinter (DE)
(74) Vertreter: Richly Ritschel

(56) Entgegenhaltungen:
- DE-A1- 2 148 271
- DE-A1- 4 031 697
- DE-A1- 10 021 055
- DE-A1- 19 942 600

## Beschreibung

Die Erfindung betrifft eine Blasformmaschine zur Herstellung von Hohlkörpern aus thermoplastischem Kunststoff, mit einem vorzugsweise holmenlosen Grundrahmen, mit wenigstens zwei als Schließplatten ausgebildeten Formaufspannplatten, mit jeweils auf den Schließplatten angeordneten Formwerkzeugen, die geschlossen eine Artikelkavität bilden, wobei eine erste Schließplatte stationär und eine zweite Schließplatte beweglich angeordnet ist, wobei die Formwerkzeuge über die Bewegung der Schließplatten relativ zueinander von einer Offenstellung in eine geschlossene Stellung bringbar sind, und mit wenigstens einem Extrusionskopf zum Ausstoßen eines Vorformling aus plastifiziertem Kunststoff.

Die Erfindung betrifft weiterhin ein Verfahren zum Extrusionsblasformen von Hohlkörpern aus thermoplastischem Kunststoff mit einer vorzugsweise holmenlosen Blasformmaschine mit wenigstens zwei Schließplatten und auf diesen angeordneten Formwerkzeugen, wobei eine erste Schließplatte stationär und eine zweite Schließplatte beweglich ausgebildet ist, wobei das Verfahren das Extrudieren wenigstens eines Vorformlings aus plastifiziertem Kunststoff umfasst, der Vorformling zwischen den geöffneten Formwerkzeugen angeordnet wird, die Formwerkzeuge um den Vorformling geschlossen werden und der Vorformling innerhalb einer von den Formwerkzeugen gebildeten Artikelkavität ausgeweitet wird.

Unter Ausstoßen eines Vorformlingsschlauchs aus einem Extrusionskopf ist im Sinne der Offenbarung sowohl die Diskontinuierliche als auch die Kontinuierliche Extrusion eines plastifizierten Kunststoffs aus einem hierfür vorgesehenen Extrusionskopf zu verstehen. Kontinuierliche Extrusion bedeutet in diesem Zusammenhang, dass die plastifizierte Masse kontinuierlich aus einer Ringspaltdüse des Extrusionskopfes austritt. Diskontinuierliche Extrusion bedeutet, dass das plastifizierte Material zunächst in einen Ringkolbenspeicher des Extrusionskopfs gefördert wird und mittels eines Ringkolbens vollständig innerhalb eines verhältnismäßig kurzen Zeitraums aus dem Extrusionskopf herausgedrückt wird.

Formwerkzeuge oder Formhälften im Sinne der Erfindung bedeutet nicht zwangsläufig, dass das damit bezeichnete Werkzeug nur aus zwei zueinander komplementären Hälften besteht, die insgesamt die Artikelkavität bilden, vielmehr können die einzelnen Teile, die beispielsweise im Sinne von Formhälften eine Öffnungs- und Schließbewegung vollziehen, aus mehreren einzeln relativ zueinander bewegbaren bzw. verfahrbaren Elementen bestehen. Auch müssen die Formwerkzeuge keine vertikale Trennnaht aufweisen, vielmehr kann eine solche Trennnaht einen beliebigen Verlauf aufweisen. Artikelkavität im Sinne der Erfindung ist nicht zwangsläufig so zu verstehen, dass eine Kavität für einen Artikel vorgesehen ist, vielmehr kann das Werkzeug als sogenanntes Mehrkavitätenwerkzeug ausgeführt sein. Darüber hinaus können aber auch in an und für sich bekannter Art und Weise in einer Kavität mehrere Artikel hergestellt werden mittels eines oder mehrerer Vorformlinge.

Vorformlinge können sowohl schlauchförmige Vorformlinge als auch bahnförmige Vorformlinge sein. Letztere können beispielsweise durch Extrusion mittels einer Breitschlitzdüse erhalten worden sein oder durch Auftrennen eines zunächst schlauchförmigen extrudierten Vorformlings zu zwei oder mehreren bahnförmigen Elementen.

Eine Blasformmaschine der Eingangs genannten Art ist beispielsweise aus der DE 199 42 600 A1 bekannt. Dort ist eine Blasformmaschine zur Artikelherstellung nach der 3D-Technik oder dem sogenannten Saugblasen hinlänglich bekannt. Beim Saugblasverfahren wird der Vorformlingsschlauch durch das geschlossene Blaswerkzeug gesaugt, das aus den Formhälften mit der Artikelkavität sowie ggf. Schieberelementen besteht, die unabhängig voneinander hydraulisch betätigt werden und die Kavität an der Ober- und Unterseite schließen können. Da der Schlauch in das geschlossene Blaswerkzeug eingesaugt wird, können keine unerwünschten Abquetschungen auftreten, der Saugblasartikel besitzt daher folglich auch keine Schweißnähte. Da anders als beim herkömmlichen Blasformverfahren um den Artikel kein umlaufender Butzen abgequetscht wird, wird diese Art des Blasformverfahrens im Allgemeinen auch als "abfallarmes Blasen" bezeichnet.

Wie aus der DE 199 42 600 A1 entnehmbar ist, ist beim Saugblasformen grundsätzlich der Schließkraftbedarf aufgrund der kleineren Quetschkantenlänge geringer als beim konventionellen Blasformen. Schließlich ist es auch nicht erforderlich, die Schließbewegung der Formaufspannplatten bzw. Formhälften in Bezug auf die Ebene, in der die Längsachse des Schlauchs verläuft, zu synchronisieren. Üblicherweise wird eine solche Synchronisation durch an sich bekannte Gleichlaufeinrichtungen bewerkstelligt, die das gleichzeitige, gleichsinnige und synchrone Schließen der Formwerkzeuge bewirken.

Aus diesem Grund wird in der DE 199 42 600 A1 für das Saugblasformen vorgeschlagen, die Blasformmaschinen ohne die sonst üblichen Holme auszuführen sowie eine Formaufspannplatte bzw. Schließplatte stationär anzuordnen, die andere Formaufspannplatte hingegen beweglich auszubilden. Auf diese Art lässt sich eine für das abfallarme Blasformen geeignete Schließeinheit bereitstellen, die keine Gleichlaufvorrichtung und keine mechanische Verbindung, beispielsweise in Form von Holmen zwischen den Schließplatten erfordert.

Eine Blasformmaschine mit einer stationären Formhälfte und einer bewegbaren Formhälfte ist beispielsweise aus der GB 789,816 bekannt. In dieser Druckschrift ist ein Blasformverfahren beschrieben, bei welchem der schlauchförmige Vorformling mittels der verfahrbaren Blasformhälfte am Extrusionskopf abgeschert wird.

Ein so früher Formkontakt des Vorformlings ist jedoch nicht immer wünschenswert, da der Vorformling bei Berührung mit dem Werkzeug partiell abkühlt was unter Umständen beim Aufweiten innerhalb der geschlossenen Kavität zu einem unregelmäßigen Reckverhalten des Vorformlings führen kann.

Bei einer vertikalen Trennnaht bzw. vertikalen Trennebene der Formwerkzeuge ist häufig eine symmetrische und synchrone Schließbewegung der Formwerkzeuge zueinander wünschenswert. Insbesondere in der Endphase der Schließbewegung ist ein symmetrisches Schließen der Formwerkzeuge wünschenswert, um eine einwandfreie Schweißnahtbildung am fertigen Artikel zu gewährleisten. Aus diesem Grund ist das in der GB 789,816 beschriebene Verfahren weniger vorteilhaft.

DE2148271 A1 offenbart eine Blasformmaschine und ein Verfahren gemäß den Oberbegriffen der Ansprüche 1 und 4. Der Erfindung liegt daher die Aufgabe zugrunde, eine Blasformmaschine sowie ein Verfahren zum Extrusionsblasformen von Hohlkörpern aus thermoplastischem Kunststoff bereitzustellen, die die zuvor erwähnten Nachteile im Wesentlichen nicht aufweisen. Insbesondere sollen die Blasformmaschine und das Verfahren so gestaltet sein, dass die Schließeinheit hinsichtlich der Anzahl und Ausbildung der benötigten Bauteile und hinsichtlich der bewegten Masse relativ einfach ausgebildet sein kann. Die erfindungsgemäße Blasformmaschine sowie das erfindungsgemäße Verfahren sollen die Vorzüge aufweisen, wie sie die Blasformmaschine gemäß DE 199 42 600 A1 besitzt, allerdings sollen die Maschine sowie das Verfahren dazu geeignet sein, Artikel nach dem herkömmlichen Extrusionsblasformen herstellen zu können. Im Sinne der Offenbarung ist hierunter ein Blasformverfahren zu verstehen, bei dem die Form des Vorformlings zwischen den geöffneten Teilen des Werkzeugs platziert wird, die dann um den Vorformling unter der bereichsweisen Bildung von Quetschnähten geschlossen werden.

Die Aufgabe wird gelöst durch eine Blasformmaschine mit den Merkmalen des Anspruchs 1 sowie durch ein Verfahren zum Extrusionsblasformen von Hohlkörpern aus thermoplastischem Kunststoff nach Anspruch 9.

Ein Gesichtspunkt der Erfindung betrifft eine Blasformmaschine zur Herstellung von Hohlkörpern aus thermoplastischem Kunststoff gemäß Anspruch 1. Die Erfindung kann im Wesentlichen dahingehend zusammengefasst werden, dass Mittel vorgesehen sind, um dem Vorformlingsschlauch eine der Schließbewegung der Formwerkzeuge überlagerte Bewegung aufzugeben, sodass trotz Anordnung einer stationären Schließplatte und einer hierzu beweglichen Schließplatte ggf. eine synchrone Schließbewegung der Schließplatten bzw. der Formwerkzeuge bezüglich des Vorformlingsschlauchs erzielt werden kann. Nicht immer ist eine solche Synchronität der Schließbewegung über den gesamten Zyklus wünschenswert. Dies hängt unter anderem auch davon ab, ob beispielsweise das Werkzeug eine vertikale oder schiefe Trennebene aufweist. Die Begriffe vertikal oder schief beziehen sich hier auf die Längsachse des entweder am Extrusionskopf oder an einer Handhabungseinrichtung hängenden Vorformlingsschlauchs. Ist die Werkzeugtrennebene in Form einer schiefen Ebene ausgestaltet, kann es unter Umständen vorteilhaft sein, wenn die Schließbewegung nur über eine Teilstrecke synchronisiert ist.

Unter einer synchronen Schließbewegung im Sinne der Erfindung ist eine gleichsinnige Annäherung der Formhälften an den Vorformling mit gleicher Geschwindigkeit zu verstehen. Hierfür ist lediglich die Relativbewegung zwischen den Formwerkzeugen und/oder den Schließplatten und der Ebene, in der die Längsachse des Schlauchs verläuft, maßgeblich.

Bei einer Blasformmaschine gemäß der Erfindung ist vorgesehen, dass der Vorformling in Richtung und vorzugsweise synchron mit der Schließbewegung der zweiten Schließplatte über wenigstens eine Teilstrecke des Schließwegs bewegbar ist.

Dies kann erfindungsgemäß dadurch bewerkstelligt werden, dass der Grundrahmen in Bezug auf den Extrusionskopf gegensinnig zu der Schließbewegung der zweiten Schließplatte verfahrbar ist.

Alternativ kann erfindungsgemäß der Extrusionskopf gleichsinnig zu der Schließbewegung der zweiten Schließplatte verfahrbar sein. Bei dieser und der zuvor beschriebenen Variante der Blasformmaschine kann der Schließvorgang des Werkzeugs bereits eingeleitet werden, während der Vorformling aus dem Extrusionskopf austritt. Eine nicht erfinderische alternative Ausführungsform der Blasformmaschine gemäß der Erfindung zeichnet sich durch eine Handhabungseinrichtung zur Bewegung des vollständig aus dem Extrusionskopf ausgestoßenen Vorformling aus. Die Handhabungseinrichtung kann auch dazu vorgesehen sein, den Vorformling von dem Extrusionskopf abzunehmen und zwischen die geöffneten Teile des Formwerkzeugs zu verbringen.

Die Handhabungseinrichtung kann mit einem Greifer ausgebildet sein.

Zweckmäßigerweise ist die Handhabungseinrichtung als ein um drei Raumachsen bewegbarer frei programmierbarer Roboterarm ausgebildet.

Eine Blasformmaschine, bei der der Maschinenrahmen eine der Schließbewegung überlagerte Bewegung vollzieht, kann beispielsweise eine Gleichlaufeinrichtung zur Synchronisation der Schließbewegung der Formwerkzeuge bezüglich einer Ebene, die durch die Längsachse des Vorformlings verläuft, aufweisen.

Als Gleichlaufeinrichtung kann beispielsweise eine mechanische Zwangskopplung des Maschinenrahmens mit einer der Schließplatten vorgesehen sein, sodass die Schließbewegung der bewegbaren Schließplatte über mechanische Hilfsmittel, beispielsweise über ein Getriebe auf den Maschinenraum übertragen wird.

Die Offenbarung ist selbstverständlich so zu verstehen, dass die Synchronisation der Bewegungsabläufe grundsätzlich über eine elektronische Maschinensteuerung erfolgen kann, ohne das hierzu notwendigerweise eine mechanische Zwangskopplung vorgesehen sein müsste.

Die erfindungsgemäße Blasformmaschine bietet den Vorzug, dass sie bedarfsweise ohne Holme auskommt und trotz nur einer bewegten Schließplatte, wodurch an bewegter Masse gespart wird, eine weitestgehend flexible Steuerung der Relativbewegung zwischen den Formwerkzeugen und dem Vorformling ermöglicht.

Ein zweiter Gesichtspunkt der Erfindung betrifft ein Verfahren zum Extrusionsblasformen von Hohlkörpern aus thermoplastischem Kunststoff gemäß Anspruch 4. Zweckmäßigerweise ist vorgesehen, dass die Relativbewegung zwischen dem Vorformling und den Schließplatten und/oder den Formwerkzeugen so gesteuert wird, dass die Ebene, durch die die Längsachse des Vorformlings verläuft, zumindest während eines Teilzyklus der Schließbewegung zwischen den Schließplatten und/oder Formwerkzeugen zentriert ist.

Bei einer Variante des Verfahrens wird der Vorformling während des Schließvorgangs in Richtung und vorzugsweise synchron mit der Schließbewegung der zweiten Schließplatte wenigstens über eine Teilstrecke der Schließbewegung mitbewegt.

Alternativ kann die Schließplattenanordnung in Bezug auf einen Extrusionskopf gegensinnig zur Schließbewegung der Schließplatten verfahren werden.

Eine weitere alternative Verfahrensweise sieht vor, dass der Extrusionskopf gleichsinnig zur Schließbewegung der Schließplatten verfahren wird.

Eine andere Verfahrensweise sieht vor, dass der Vorformlingsschlauch mittels einer Handhabungseinrichtung am Extrusionskopf abgenommen wird und von der Handhabungseinrichtung während des Schließvorgangs über wenigstens eine Teilstrecke der Bewegung der zweiten Schließplatte synchron mit dieser zwischen den Schließplatten mitbewegt wird.

Die Erfindung wird nachstehend anhand eines in den Zeichnungen dargestellten Beispiels erläutert.

Es zeigen:
- Figur 1: einen Teilschnitt durch eine Blasformmaschine gemäß der Erfindung mit vollständig geöffneten Formwerkzeugen,
- Figur 2: eine Draufsicht auf die Blasformmaschine in Figur 1,
- Figur 3: einenTeilschnitt durch eine Blasformmaschine gemäß der Erfindung entsprechend der in Figur 1 dargestellten Blasformmaschine, jedoch mit sich schließenden bzw. beinah geschlossenen Formwerkzeugen,
- Figur 4: eine Draufsicht auf die Blasformmaschine in Figur 3 und
- Figur 5: eine Draufsicht auf eine Anordnung zweier Blasformmaschinen gemäß der Erfindung, denen eine gemeinsame Handhabungseinrichtung zugeordnet ist.

Die in den Figuren dargestellte Blasformmaschine 1 umfasst in bekannter Art und Weise einen Grundrahmen 2, zwei Schließplatten 3a, 3b und einen Extrusionskopf 4, an den nicht dargestellte Extruder (einer oder mehrere) angeschlossen sind. Das über die nicht dargestellten Extruder plastifizierte thermoplastische Material tritt aus einer nicht bezeichneten Ringspaltdüse des Extrusionskopfs 4 als schlauchförmiger, warmplastischer Vorformling - nachstehend als Vorformlingsschlauch 5 bezeichnet - aus.

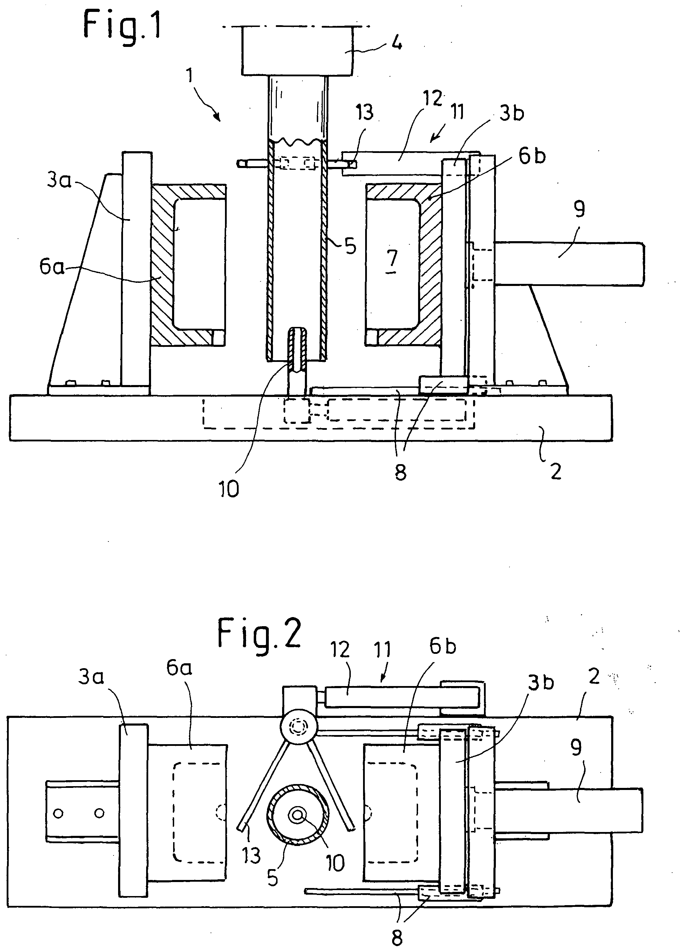

Bei der in Figur 1 dargestellten Blasformmaschine sind auf den Schließplatten 3a, 3b jeweils Formhälften 6a, 6b befestigt bzw. aufgespannt, die gemeinsam eine Artikelkavität 7 bilden.

Die Blasformmaschine 1 gemäß der Erfindung ist als eine solche Maschine ausgebildet, bei der die Schließplatten 3a, 3b und/oder die Formhälften 6a, 6b in Bezug auf die Aufstellebene eine im Wesentlichen horizontale Bewegung in Bezug auf den Vorformlingsschlauch 5 vollziehen. Der Vorformlingsschlauch 5 wiederum wird in Bezug auf die Aufstellebene im Wesentlichen vertikal, d.h. in Schwerkraftrichtung extrudiert.

Wie eingangs bereits erwähnt, wird hier der Einfachheit halber der Begriff Formhälften verwendet, Der Begriff ist so zu verstehen, dass das Werkzeug nicht notwendigerweise aus zwei zueinander komplementären Hälften bestehen muss. Vielmehr kann jede Formhälfte als komplexes Bauteil mit mehreren beweglichen Teilen oder Segmenten ausgebildet sein. Das Werkzeug kann darüber hinaus beispielsweise auch insgesamt dreiteilig ausgebildet sein.

Die in der Zeichnung links dargestellte Schließplatte 3a ist als auf dem Grundrahmen 2 stationär angeordnete Schließplatte ausgebildet, wohingegen die auf der gegenüberliegenden Seite angeordnete Schließplatte 3b beidseitig auf einer Linearführung 8 am Grundrahmen 2 abgestützt ist und über einen hydraulischen Kraftantrieb 9 in Richtung auf die diametral gegenüberliegende Schließplatte 3a bewegbar ist. An den Schließplatten 3a,3b und/oder an den Formhälften 6a, 6b können an und für sich bekannte Verriegelungseinrichtungen zum Zuhalten der Formhälften 6a, 6b oder zur Verstärkung der Schließkraft über den letzten Teil des Schließweges vorgesehen sein. Diese Verriegelungseinrichtungen sind der Einfachheit halber hier nicht dargestellt. Mit 10 ist ein Blasdorn bezeichnet, der gleichzeitig und gleichsinnig mit der verfahrbaren Schließplatte 3b und/oder einer etwaigen Relativbewegung des Vorformlingsschlauchs 5 zu den Schließplatten 3a, 3b verfahrbar ist. In dem Bereich der Blasformmaschine 1 kann auch eine Schlauchspreizvorrichtung oder auch eine Schlauchschließvorrichtung vorgesehen sein. Dies wird dann in gleicher Weise gleichzeitig und gleichsinnig mit der verfahrbaren Schließplatte 3b und/oder einer etwaigen Relativbewegung des Vorformlingsschlauchs 5 zu den Schließplatten 3a, 3b verfahren.

Die hier beschriebenen Bewegungsabläufe können von einer nicht näher beschriebenen elektronischen Steuereinrichtung vorgegeben sein oder ganz oder teilweise mechanisch gekoppelt sein.

Bei den anhand der beigefügten Zeichnungen erläuterten Ausführungsbeispielen wird der Vorformlingsschlauch 5 mittels einer Handhabungseinrichtung 11 am Extrusionskopf 4 abgenommen, nachdem der Vorformlingsschlauch 5 auf seine volle Länge ausgestoßen wurde, bzw. ausgetreten ist.

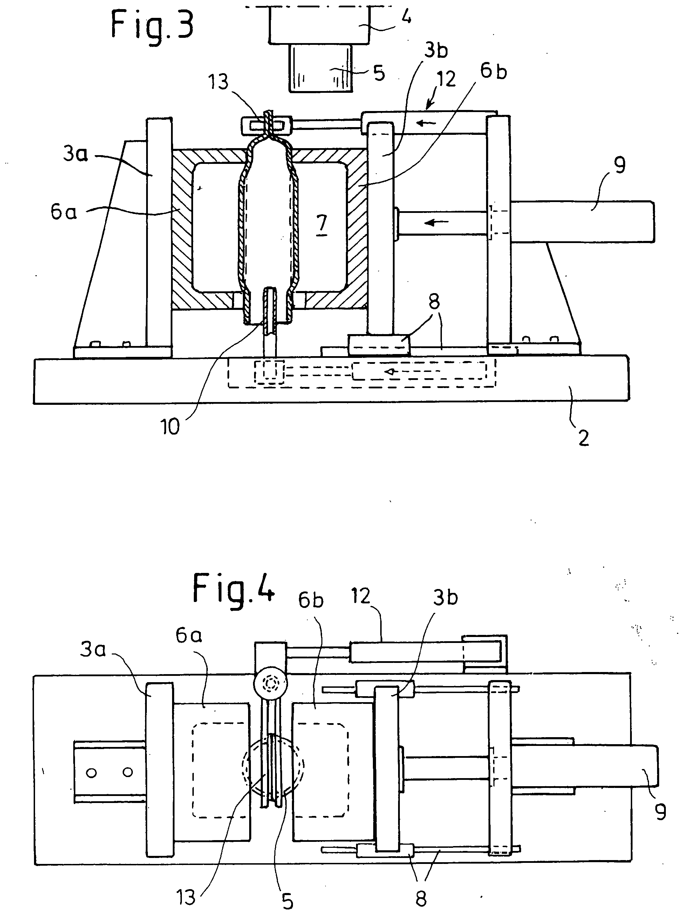

Die Handhabungseinrichtung 11 ist als Roboter mit einem um drei Raumachsen artikulierbaren Roboterarm und einem Greifer 13 ausgebildet. Wie einer Zusammenschau der Figuren 1 bis 4 zu entnehmen ist, erfasst der Greifer 13 den am Extrusionskopf 4 hängend abgelängten Vorformlingsschlauch 5. In einem nicht dargestellten Verfahrensschritt wird der Vorformlingsschlauch 5 vom Extrusionskopf 4 getrennt. Dies kann durch Abreißen mittels des Greifers 13 erfolgen. In diesem Falle kann durch Wanddickensteuerung des Vorformlingsschlauch 5 im Extrusionskopf 4 eine Dünnstelle erzeugt worden sein, die das Abreißen erleichtert. Alternativ kann der Vorformlingsschlauch 5 mittels einer nicht dargestellten Trennvorrichtung am Extrusionskopf 4 abgetrennt werden. Der Vorformlingsschlauch 5 wurde bereits zwischen die geöffneten Formhälften 6a, 6b des Werkzeugs extrudiert, alternativ ist es auch möglich, den Vorformlingsschlauch 5 an anderer Stelle zu extrudieren und mittels des Greifers 13 zwischen den geöffneten Formhälften 6a, 6b des Werkzeugs zu platzieren.

Ist der Vorformlingsschlauch 5 zwischen den Formhälften 6a, 6b des Werkzeugs angeordnet, verfährt die in der Zeichnung rechts dargestellte Schließplatte 3b in Richtung auf die gegenüberliegend angeordnete stationäre Schließplatte 3a, und zwar durch Betätigung des Kraftantriebs 9. Es wird nun vorgesehen, dass der Greifer 13 mit dem daran hängenden Vorformlingsschlauch 5 sowie dem in den Vorformlingsschlauch eingetauchten Blasdorn 10 gleichsinnig wie die verfahrbare Schließplatte 3b in Richtung auf die stationäre Schließplatte 3a mitbewegt wird, und zwar derart, dass der Vorformlingsschlauch 5 bis zur Vollendung des Schließvorgangs zwischen den Formhälften 6a, 6b und/oder zwischen den Schließplatten 3a/3b zentriert ist, mit dem Ergebnis, dass die Formhälften 6a, 6b gleichzeitig mit dem Vorformlingsschlauch 5 in Kontakt gelangen. In Bezug auf den Vorformlingsschlauch wird also eine symmetrische Schließbewegung der Formhälften 6a, 6b vollzogen.

Die zuvor beschriebene Verfahrensweise hat den Vorzug, dass ein früher einseitiger Formkontakt des Vorformlingsschlauchs 5 zuverlässig vermieden wird.

Wie eingangs bereits erwähnt wurde, kann mittels der beschriebenen Blasformmaschine auch eine nicht symmetrische Schließbewegung zumindest über Teile des Schließweges realisiert werden.

In einem weiteren nicht dargestellten Verfahrensschritt wird der Vorformlingsschlauch 5 innerhalb der von den Formhälften 6a, 6b gebildeten Artikelkavitäten 7 aufgeweitet, sodass der Vorformlingsschlauch 5 die Gestalt des fertigen Artikels annimmt, die der Innenkontur der Artikelkavität 7 entspricht. Dabei wird unter Krafteinwirkung zumindest bereichsweise am Umfang des fertigen Artikels eine Abquetschung des Vorformlingsschlauchs 5 bewirkt, und zwar unter Bildung eines teilweise vorstehenden Randes (Butzen).

Anschließend werden die Schließplatten 3a, 3b auseinandergefahren und der Artikel wird auf der der Handhabungseinrichtung 11 gegenüberliegenden Seite der Blasformmaschine entnommen. Hierzu kann beispielsweise ein Entnahmegreifer vorgesehen sein, der in den Figuren nicht dargestellt ist.

Die Ausbildung der Blasformmaschine 1 ohne die sonst üblichen Holme hat den Vorzug, dass sowohl die Handhabungseinrichtung 11 als auch ein Entnahmegreifer freien Zugang zu dem Freiraum zwischen den Formhälften 6a, 6b haben.

Die holmenlose Ausbildung der Blasformmaschine 1 hat darüber hinaus den Vorzug, das der Ein- und Ausbau der Werkzeuge erleichtert ist.

Es ist für den Fachmann einleuchtend, dass je nach Tiefe der Formhälften 6a, 6b bzw. der Teilkavitäten der Formhälften 6a, 6b ein Entnahmegreifer oder eine andere Vorrichtung zur Artikelentnahme eine Teilbewegung in Richtung der Schließachse der Schließplatten 3a, 3b vollziehen muss.

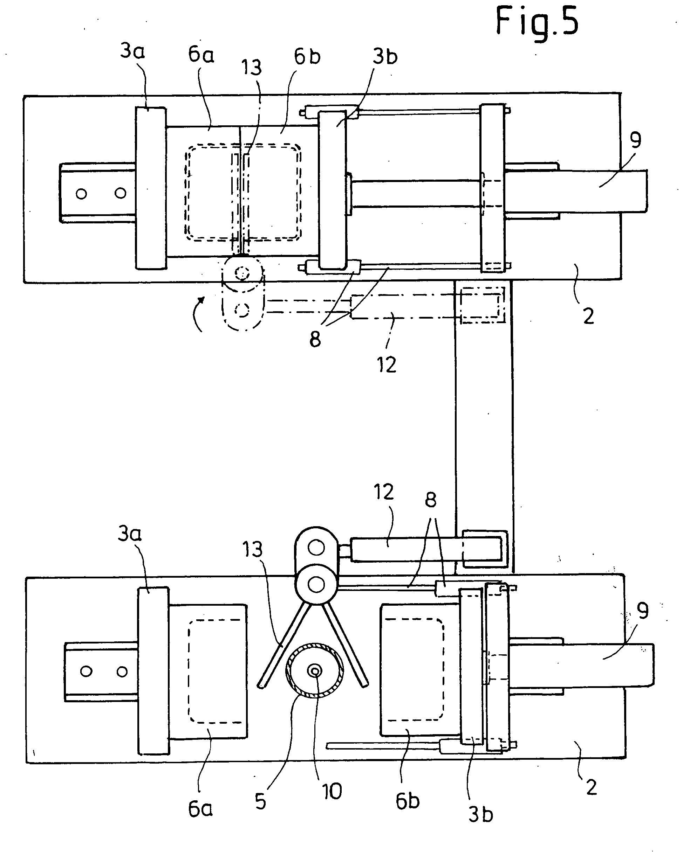

In Figur 5 ist eine Anordnung zweier Blasformmaschinen 1 in Draufsicht dargestellt, bei denen die Handhabung des Vorformlingsschlauchs 5 mittels einer gemeinsamen Handhabungseinrichtung 11 vollzogen wird. Die Zyklen der Öffnungs- und Schließbewegungen der Schließplatten 3a, 3b sind so gewählt, dass die Handhabungseinrichtung 11 abwechselnd die eine oder andere Blasformmaschine bedienen kann.

### Bezugszeichenliste

- 1: Blasformmaschine
- 2: Grundrahmen
- 3a, 3b: Schließplatten
- 4: Extrusionskopf
- 5: Vorformlingsschlauch
- 6a, 6b: Formhälften
- 7: Artikelkavität
- 8: Linearführung
- 9: Kraftantrieb
- 10: Blasdorn
- 11: Handhabungseinrichtung
- 12: Roboterarm
- 13: Greifer

## Patentansprüche

1. Blasformmaschine (1) zur Herstellung von Hohlkörpern aus thermoplastischem Kunststoff, mit einem holmenlosen Grundrahmen (2) mit wenigstens zwei als Schließplatten (3a, 3b) ausgebildeten Formaufspannplatten, mit jeweils auf den Schließplatten (3a, 3b) angeordneten Formwerkzeugen (6a, 6b) die geschlossen eine Artikelkavität (7) bilden, wobei eine erste Schließplatte (3a) stationär und eine zweite Schließplatte (3b) beweglich angeordnet ist, wobei die Formwerkzeuge über die Bewegung der Schließplatten (3a, 3b) relativ zueinander von einer Offenstellung in eine geschlossenen Stellung bringbar sind und mit wenigstens einem Extrusionskopf zur Bereitstellung eines Vorformlings (5) aus plastifiziertem Kunststoff, mit Mitteln zur Relativbewegung des voll- oder teilweise extrudierten Vorformlings (5) bzgl. der Schließbewegung der Formwerkzeuge (6a, 6b) in der Achse der Schließbewegung, wobei die Relativbewegung des Vorformlings (5) der Bewegung der Formwerkzeuge (6a, 6b) und/oder Schließplatten (3a, 3b) überlagert ist, **dadurch gekennzeichnet, dass** der Grundrahmen (2) in Bezug auf den Extrusionskopf (4) gegensinnig zu der Schließbewegung der zweiten Schließplatte (3b) verfahrbar ist oder dass der Extruder und/oder der Extrusionskopf (4) gleichsinnig zu der Schließbewegung der zweiten Schließplatte (3b) verfahrbar ist.

2. Blasformmaschine (1) nach Anspruch 1, **dadurch gekennzeichnet, dass** der Vorformling (5) in Richtung und vorzugsweise synchron mit der Schließbewegung der Schließplatten (3a, 3b) über wenigstens eine Teilstrecke des Schließweges bewegbar ist.

3. Blasformmaschine (1) nach Anspruch 1, **gekennzeichnet durch** eine Gleichlaufeinrichtung zur Synchronisation der Schließbewegung der Formwerkzeuge (6a, 6b) bezüglich einer Ebene, die durch die Längsachse des Vorformlings (5) verläuft.

4. Verfahren zum Extrusionsblasformen von Hohlkörpern aus thermoplastischem Kunststoff mit einer holmenlosen Blasformmaschine mit wenigstens zwei Schließplatten und auf diesen angeordneten Formwerkzeugen, wobei eine erste Schließplatte stationär und eine zweite Schließplatte beweglich ausgebildet ist, wobei das Verfahren das Extrudieren wenigstens eines Vorformlings aus plastifiziertem Kunststoff umfasst, der Vorformling zwischen den geöffneten Formwerkzeugen angeordnet wird, die Formwerkzeuge um den Vorformling geschlossen werden und der Vorformling innerhalb einer von den Formwerkzeugen gebildeten Artikelkavität aufgeweitet wird, wobei dem Vorformling während des Schließvorgangs der Schließplatten in der Achse der Schließbewegung über wenigstens eine Teilstrecke des Schließweges eine die Schließbewegung überlagernde Relativbewegung aufgegeben wird, **dadurch gekennzeichnet, dass** die Schließplattenanordnung in Bezug auf einen Extruder und/oder Extrusionskopf gegensinnig zur Schließbwegung der zweiten Schließplatte verfahren wird oder dass der Extruder und/oder der Extrusionskopf gleichsinnig zur Schließbewegung der zweiten Schließplatte verfahren wird.

5. Verfahren nach Anspruch 4, **dadurch gekennzeichnet, dass** dieRelativbewegung zwischen dem Vorformling und den Schließplatten und/oder den Formwerkzeugen so gesteuert wird, dass die Ebene, durch die die Längsachse des Vorformlings verläuft, zumindest während eines Teils des Zyklus der Schließbewegung zwischen den Schließplatten und/oder Formwerkzeugen zentriert ist.

## Claims

1. Blow moulding machine (1) for producing hollow bodies from thermoplastic material, comprising a base frame (2) without tie bars that has at least two mould platens formed as closing plates (3a, 3b), with moulds (6a, 6b) that in the closed state form an article cavity (7) respectively arranged on the closing plates (3a, 3b), wherein a first closing plate (3a) is arranged in a stationary manner and a second closing plate (3b) is arranged in a movable manner, wherein the moulds can be brought from an open position into a closed position by way of the movement of the closing plates (3a, 3b) in relation to one another, and comprising at least one extrusion head for providing a preform (5) of plasticated material, comprising means for the relative movement of the fully or partially extruded preform (5) with respect to the closing movement of the moulds (6a, 6b) in the axis of the closing movement, wherein the relative movement of the preform (5) is performed at the same time as the movement of the moulds (6a, 6b) and/or closing plates (3a, 3b), **characterized in that** the base frame (2) is movable in the opposite direction to the closing movement of the second closing plate (3b) with respect to the extrusion head (4) or **in that** the extruder and/or the extrusion head (4) is movable in the same direction as the closing movement of the second closing plate (3b).

2. Blow moulding machine (1) according to Claim 1, **characterized in that** the preform (5) is movable in the direction of and preferably synchronously with the closing movement of the closing plates (3a, 3b) over at least a section of the closing path.

3. Blow moulding machine (1) according to Claim 1, **characterized by** a synchronizing device for synchronization of the closing movement of the moulds (6a, 6b) with respect to a plane that extends through the longitudinal axis of the preform (5).

4. Method for the extrusion blow moulding of hollow bodies from thermoplastic material with a blow moulding machine without tie bars, comprising at least two closing plates and moulds arranged on them, wherein a first closing plate is formed in a stationary manner and a second closing plate is formed in a movable manner, wherein the method comprises the extrusion of at least one preform of plasticated material, the preform is arranged between the opened moulds, the moulds are closed around the preform and the preform is expanded within an article cavity formed by the moulds, wherein a relative movement performed at the same time as the closing movement is imparted to the preform during the closing operation of the closing plates in the axis of the closing movement over at least a section of the closing path, **characterized in that** the closing plate arrangement is moved in the opposite direction to the closing movement of the second closing plate with respect to an extruder and/or extrusion head or **in that** the extruder and/or the extrusion head is moved in the same direction as the closing movement of the second closing plate.

5. Method according to Claim 4, **characterized in that** the relative movement between the preform and the closing plates and/or the moulds is controlled such that the plane through which the longitudinal axis of the preform passes is centred, at least during part of the cycle of the closing movement between the closing plates and/or moulds.

## Revendications

1. Machine de formage par soufflage (1) pour la fabrication de corps creux en matière synthétique thermoplastique, comprenant un cadre de base sans colonne (2) avec au moins deux plateaux porte-moules réalisés sous forme de plaques de fermeture (3a, 3b), avec des outils de formage (6a, 6b) disposés à chaque fois sur les plaques de fermeture (3a, 3b), qui, lorsqu'ils sont fermés, forment une cavité d'articles (7), une première plaque de fermeture (3a) étant disposée de manière stationnaire et une deuxième plaque de fermeture (3b) étant disposée de manière déplaçable, les outils de formage pouvant être amenés, par le biais du déplacement des plaques de fermeture (3a, 3b) l'une par rapport à l'autre, d'une position ouverte dans une position fermée, et comprenant au moins une tête d'extrusion destinée à produire une préforme (5) en matière synthétique plastifiée, avec des moyens de déplacement relatif de la préforme (5) complètement ou partiellement extrudée par rapport au mouvement de fermeture des outils de formage (6a, 6b) dans l'axe du déplacement de fermeture, le déplacement relatif de la préforme (5) étant superposé au mouvement des outils de formage (6a, 6b) et/ou des plaques de fermeture (3a, 3b), **caractérisée en ce que** le cadre de base (2) peut être déplacé par rapport à la tête d'extrusion (4) en sens inverse du mouvement de fermeture de la deuxième plaque de fermeture (3b) ou **en ce que** l'extrudeuse et/ou la tête d'extrusion (4) peuvent être déplacées dans le même sens que le mouvement de fermeture de la deuxième plaque de fermeture (3b) .

2. Machine de formage par soufflage (1) selon la revendication 1, **caractérisée en ce que** la préforme (5) peut être déplacée dans la direction du mouvement de fermeture des plaques de fermeture (3a, 3b) et de préférence de manière synchrone avec celui-ci, sur au moins une section partielle de la course de fermeture.

3. Machine de formage par soufflage (1) selon la revendication 1, **caractérisée par** un dispositif de synchronisation pour la synchronisation du mouvement de fermeture des outils de formage (6a, 6b) par rapport à un plan qui s'étend à travers l'axe longitudinal de la préforme (5).

4. Procédé d'extrusion par soufflage de corps creux en matière synthétique thermoplastique, comprenant une machine de formage par soufflage sans colonne avec au moins deux plaques de fermeture et des outils de formage disposés sur celle-ci, une première plaque de fermeture étant réalisée de manière stationnaire et une deuxième plaque de fermeture étant réalisée de manière mobile, le procédé comprenant l'extrusion d'au moins une préforme en matière synthétique plastifiée, la préforme étant disposée entre les outils de formage ouverts, les outils de formage étant fermés autour de la préforme et la préforme étant élargie à l'intérieur d'une cavité d'articles formés par les outils de formage, un déplacement relatif superposé au mouvement de fermeture étant conféré à la préforme pendant l'opération de fermeture des plaques de fermeture dans l'axe du mouvement de fermeture sur au moins une section partielle de la course de fermeture, **caractérisé en ce que** l'agencement des plaques de fermeture est déplacé, par rapport à une extrudeuse et/ou une tête d'extrusion, en sens inverse par rapport au mouvement de fermeture de la deuxième plaque de fermeture ou **en ce que** l'extrudeuse et/ou la tête d'extrusion sont déplacées dans le même sens que le mouvement de fermeture de la deuxième plaque de fermeture.

5. Procédé selon la revendication 4, **caractérisé en ce que** le mouvement relatif entre la préforme et les plaques de fermeture et/ou les outils de formage est commandé de telle sorte que le plan à travers lequel s'étend l'axe longitudinal de la préforme soit centré au moins pendant une partie du cycle du mouvement de fermeture entre les plaques de fermeture et/ou les outils de formage.
